(19) Europäisches Patentamt

European Patent Office

Office européen des brevets

(11) **EP 1 106 640 A2**

(12) **EUROPEAN PATENT APPLICATION**

(43) Date of publication:
**13.06.2001 Bulletin 2001/24**

(51) Int Cl.[7]: **C08G 63/16**, C08G 63/78

(21) Application number: **00310993.1**

(22) Date of filing: **08.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.12.1999 KR 9956991**

(71) Applicant: **IRE Chemical Ltd**
**Gangnam-gu, Seoul 135-080 (KR)**

(72) Inventors:
• **Chung, Hyun Soo**
**Seoul 135-240 (KR)**

• **Lee, Jae Wang**
**Seoul 156-030 (KR)**
• **Kim, Dong Hoon**
**Seoul 137-063 (KR)**
• **Kim, Do Youn**
**Seoul 143-130 (KR)**
• **Lee, Suok Woo**
**Kangwon-do 225-870 (KR)**

(74) Representative: **Bannerman, David Gardner et al**
**Withers & Rogers,**
**Goldings House,**
**2 Hays Lane**
**London SE1 2HW (GB)**

(54) **Biodegradable copolyesters and their preparation**

(57)    A copolyester resin composition which has good physical properties and processability, wherein (i) 0.1wt% to 30wt% of an "aromatic-aliphatic prepolymer" having number average molecular weight of from 300 to 30,000; (ii) ) 40wt% to 71wt% of one or more aliphatic or alicyclic dicarboxylic acids or anhydrides and (iii) 29wt% to 60wt% of one or more aliphatic or alicyclic glycols are reacted together. The copolyester resin has a number average molecular weight of from 30,000 to 70,000, a weight average molecular weight of from 100,000 to 600,000, melting point of from 55°C to 120°C, and melt index (190°C, 2,160g) of from 0.1 to 30 g/10min. The product is a high molecular weight copolyester which has biodegradability and physical properties required for packaging film and rubbish bags.

EP 1 106 640 A2

**Description**

## FIELD OF THE INVENTION

The present invention relates to copolyester resin compositions which have good physical properties and biodegradability and a process for preparing and/or producing them. The compositions are suitable for various applications, such as films, moldings, and fibers. More particularly, the present invention has solved a problem of poor physical properties, especially tensile strength and tear strength, so the compositions have many practical uses including packaging film and rubbish bags.

## DESCRIPTION OF THE RELATED ARTS

Many aliphatic polyester resin compositions have been described in the literature that biodegrade completely in the environment. But they have proved difficult to commercialize because of high cost, poor physical properties and inferior processability comparing to the conventional polymers such as polyethylene, polypropylene and polystyrene.

The typical polyester resin used for various products including textures, fibers, moldings, formings, films, etc, is a high molecular weight aromatic polyester resin produced by the polycondensation of terephthalic acid with ethylene glycol, or terephthalic acid with 1,4-butanediol. The high molecular weight polyester resin is a polymer having a number average molecular weight of over 10,000. Such aromatic polyester resins are not degradable naturally so disposal is a serious problem of worldwide environmental concern.

Otherwise, the aliphatic polyester resins are known as being biodegradable (J.Macromol. Sci.-Chem., A23 (3), pp.393-409 (1986)). They have a variety of uses in the medical and agricultural fields, and other applications are being developed.

However, conventional aliphatic polyester resins have a low melting point and a high melt index, because of the structure of the main chain and the crystallinity thereof. As they also display low heat resistance and unsatisfactory mechanical properties, usage of these polymer materials has been limited. In order to be useful, an aliphatic polyester resin should have a number average molecular weight of more than 30,000. However, it is difficult to manufacture aliphatic polyester resins having a number average molecular weight of more than 15,000 using the conventional polycondensation reaction system because further growth is overtaken by decomposition due to the poor heat stability of aliphatic polyesters.

In order to solve this problem, Korean Laid-Open Patent No. 95-758 discloses a process of preparing high molecular weight aliphatic polyester resins having a number average molecular weight of more than 30,000, by controlling the reaction temperature, the degree of vacuum and the amount of catalyst. However, these aliphatic polyester resins have poor processability because of low weight-average molecular weight and low heat stability.

Korean Laid-Open Patent No. 95-114171 discloses a process of preparing high molecular weight aliphatic polyester resins by introducing monomer containing poly(at least three)-functional groups, where the recommended functional groups are hydroxy(-OH) or carboxylic(-COOH). According to this process, by introducing such monomer, the reaction time can be reduced and the processability of the resin can be enhanced by broadening the molecular weight distribution. However, utilization of the polyester resin product is very difficult because physical properties such as a tensile strength are poor due to the increased amount of low molecular weight components. Furthermore, it is difficult to control the reaction to prepare the polyester resin, because the polyester resin easily forms a gel.

As yet another process for increasing the molecular weight of an aliphatic polyester resin, Korean Laid-Open Patent No. 95-25072 discloses high molecular weight aliphatic polyester resins produced by using isocyanate as a coupling agent reacting with an aliphatic polyester resin having a number average molecular weight of from 15,000 to 20,000, which is produced by dehydration or deglycolation of (1) an aliphatic (or alicyclic compound), and (2) an aliphatic (or alicyclic) dicarboxylic acid (or anhydride), and a little of a (3) monomer of polyhydric alcohol or polyhydric carboxylic acid (or anhydride). According to the application, the aliphatic polyester resin has a number average molecular weight of from 20,000 to 70,000. However, this process requires a longer reaction time which leads to poor production yield. And the isocyanate used as a coupling agent to increase the molecular weight is toxic so it needs to be handled carefully.

As yet another process for increasing the molecular weight of an aliphatic polyester resin, US Patent No. 5,843,573 discloses a high molecular weight aliphatic polyester resin produced by using a twin-screw extruder. However this process is very complicated and requires a longer reaction time.

As yet another process for increasing the molecular weight of the aliphatic polyester resin, International Application WO95/03347A1 discloses a high molecular weight aliphatic polyester resin produced by using diethylene glycol as a glycol ingredient. However this process requires a longer reaction time, and the product is not suitable for practical use because of its low melting point and poor physical properties.

In the conventional processes as mentioned above, coupling agents such as isocyanates or monomers such as a polyhydric alcohols or polyhydric carboxylic acids have been used. These conventional processes have many problems such as low production yields, poor physical properties and/or poor processability.

## SUMMARY OF THE INVENTION

The present invention provides a copolyester resin composition which has good physical properties, biodegradability and processability and a process for preparing and/or producing the same. To improve the biodegradability and physical properties of the copolyester, the present invention employs a multi-stage reaction, and copolyester resins having number-average molecular weights of from 30,000 to 70,000, weight-average molecular weightsof from 100,000 to 600,000, melting points of from 55°C to 120 °C, and melt indexes of from 0.1 to 30 g/10minute (190°C, 2,160g)can be obtained. The processability and physical properties of the copolyester resins of the present invention have been greatly enhanced by incorporating (i) an "aromatic-aliphatic prepolymer" having number-average molecular weight of from 300 to 30,000 and a number of contiguous repeating aromatic units in the dicarboxylic acid portion less than 5. Thus the product can be processed using conventional processing equipment for polyethylene and polypropylene without any modification.

To solve the above mentioned problems, the present inventors have employed a multi-step reaction. The copolyester resin composition according to the present invention will be described in detail hereinafter.

In the first reaction step, an oligomer-like substance (hereinafter referred to as "aromatic-aliphatic prepolymers") having number average molecular weights of from 300 to 30,000 and having fewer than 5 contiguous repeating aromatic units in the dicarboxylic acid portion is obtained by one or more condensation, esterification and/or ester-exchange reactions with three ingredients, which are preferably

(a) one or more aromatic dicarboxylic acids (or anhydrides thereof) selected from dimethyl terephthalate, terephthalic acid, phthalic acid, phthalic anhydride, isophthalic acid, 4-methylphthalic acid, 4-methylphthalic anhydride, dimethyl phthalate;

(b) one or more aliphatic (or alicyclic) dicarboxylic acids (or anhydrides thereof) selected from succinic acid, glutaric acid, adipic acid, pimelic acid, suberic acid, azelaic acid, sebacic acid, 1,9-nonanedicarboxylic acid, 1,10-decanedicarboxylic acid; and

(c) one or more aliphatic (or alicyclic) glycols selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol.

Next, in the second reaction step, to from 0.1wt% to 30wt% of the "aromatic-aliphatic prepolymer" produced in the first reaction step is added (ii) from 40wt% to 70wt% of one or more aliphatic (or alicyclic) dicarboxylic acids (or anhydrides thereof) preferably selected from succinic acid, glutaric acid, adipic acid, pimelic acid, suberic acid, azelaic acid, sebacic acid, 1,9-nonanedicarboxylic acid, 1,10-decanedicarboxylic acid, and (iii) from 29wt% to 60wt% of one or more aliphatic or alicyclic glycols preferably selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol, and one or more esterification and/or ester-exchange reactions are performed so as to obtain a polymeric resin.

Finally, in the third reaction step, the polymeric resin which was produced in the second reaction step is polycondensed to obtain a copolyester with a number-average molecular weight of from 30,000 to 70,000, weight-average molecular weight of from 100,000 to 600,000, melting point of from 55°C to 120°C, and melt index of from 0.1 to 30 g/10minute (190°C, 2,160g).

In the first reaction step, (i) the "aromatic-aliphatic prepolymer" is obtained by at least one of a condensation, esterification, or ester-exchange reaction, with (a) one or more aromatic dicarboxylic acids or anhydrides containing aromatic groups, includes dimethyl terephthalate and terephthalic acid; (b) one or more aliphatic or alicyclic dicarboxylic acids or anhydrides, e.g. succinic acid; and (c) one or more aliphatic or alicyclic glycols selected from at least one of 1,4-butanediol and ethylene glycol. Preferred ingredients are succinic acid alone; ethylene glycol alone or a mixture of ethylene glycol and another glycol (C3-C10 alkylene, C4-C10 cycloalkylene); aromatic dicarboxylic acid (dimethyl terephthalate, terephthalic acid), α succinic acid alone; 1,4-butanediol alone or a mixture of 1,4-butanediol and another glycol (C2-C3 and C5-C10 alkylene, C4-C 10 cycloalkylene); aromatic dicarboxylic acid (dimethyl terephthalate, terephthalic acid), β succinic acid alone or a mixture of succinic acid and other dicarboxylic acid (C3-C10 alkylene, C4-C10 cycloalkylene); ethylene glycol alone; aromatic dicarboxylic acid (dimethyl terephthalate, terephthalic acid), *X* succinic acid alone or a mixture of succinic acid and other dicarboxylic acid (C3-C10 alkylene, C4-C10 cycloalkylene); 1,4-butanediol alone; aromatic dicarboxylic acid (dimethyl terephthalate, terephthalic acid), δ succinic acid alone or a mixture of succinic acid and other dicarboxylic acid (C3-C10 alkylene, C4-C10 cycloalkylene); ethylene glycol alone or a mixture of ethylene glycol and other glycol (C3-C10 alkylene, C4-C10 cycloalkylene); aromatic dicarboxylic acid (dimethyl terephthalate, terephthalic acid), ε succinic acid alone or a mixture of succinic acid and other dicarboxylic acid (C3-C10 alkylene, C4-C10 cycloalkylene); 1,4-butanediol alone or a mixture of 1,4-butanediol and other glycol (C2-C3 and C5-C10 alkylene, C4-C10 cycloalkylene); aromatic dicarboxylic acid (dimethyl terephthalate, terephthalic acid).

Next, in the second reaction step, from 0.1wt% to 30wt% of (i) the "aromatic-aliphatic prepolymer" produced in the first reaction step is mixed with (ii) one or more aliphatic (or alicyclic) dicarboxylic or anhydrides thereof, including succinic acid; and (iii) one or more aliphatic or alicyclic glycols selected from at least one of 1,4-butanediol and ethylene glycol. Preferred ingredients are succinic acid alone; ethylene glycol alone or a mixture of ethylene glycol and other glycol (C3-C10 alkylene, C4-C10 cycloalkylene), α succinic acid alone; 1,4-butanediol alone or a mixture of 1,4-butanediol and other glycol (C2-C3 and C5-C10 alkylene, C4-C10 cycloalkylene), β succinic acid alone or a mixture of succinic acid and other dicarboxylic acid (C3-C10 alkylene, C4-C10 cycloalkylene); ethylene glycol alone, χ succinic acid alone or a mixture of succinic acid and other dicarboxylic acid (C3-C10 alkylene, C4-C10 cycloalkylene); 1,4-butanediol alone, δ succinic acid alone or a mixture of succinic acid and other dicarboxylic acid (C3-C10 alkylene, C4-C10 cycloalkylene); ethylene glycol alone or a mixture of ethylene glycol and other glycol (C3-C10 alkylene, C4-C10 cycloalkylene), ε succinic acid alone or a mixture of succinic acid and other dicarboxylic acid (C3-C10 alkylene, C4-C10 cycloalkylene); 1,4-butanediol alone or a mixture of 1,4-butanediol and other glycol (C2-C3 and C5-C10 alkylene, C4-C10 cycloalkylene), and one or more esterification and/or ester-exchange reactions are performed to thus obtain the polymeric resin after water or methanol has been extracted.

The present invention provides a process for preparing and/or producing the above mentioned copolyester resin comprising three reaction steps which are described below in detail.

The first reaction step, to produce the aromatic-aliphatic prepolymer, is preferably performed at a temperature of from 160°C to 240°C, the resulting water or methanol being extracted. If the reaction temperature is lower than 160°C, the water or methanol cannot easily be extracted. If the reaction temperature is higher than 240°C, the reactants may become degraded

To describe this in more detail, at first (a) one or a plurality of aromatic dicarboxylic acids or anhydrides thereof which containing aromatic groups, including dimethyl terephthalate and terephthalic acid, and (c) one or a plurality of aliphatic or alicyclic glycols selected from at least one of 1,4-butanediol and ethylene glycol, are reacted together to produce water or methanol by condensation, esterification, and/or ester-exchange reactions, at a temperature preferably from 180°C to 220°C. Then after the resulting water or methanol has been removed at a temperature of from 160°C to 180°C at which temperature range the aromatic dicarboxylic acid no longer reacts with the aliphatic glycol, (b) one or a plurality of aliphatic or alicyclic dicarboxylic acids or anhydrides thereof including succinic acid is added to produce (i) the aromatic-aliphatic prepolymers described above. Because there are fewer than 5 contiguous repeating aromatic units in the dicarboxylic acid portion of the "aromatic-aliphatic prepolymer" the biodegradability of the copolyester is not affected. The chemical reaction is represented by the following equation (I), wherein terephthalic acid is employed as the (a) aromatic dicarboxylic acid, succinic acid is employed as the (b) aliphatic dicarboxylic acid ingredient, and 1,4-butanediol is employed as the (c) aliphatic (including cyclic type) glycol.

$$HOOC-(C_6H_4)-COOH \quad + \quad HOOC-(CH_2)_2-COOH \quad \cdot \quad HO-(CH_2)_4-OH \quad \longrightarrow$$

$$A) \ HO-[\overset{O}{\overset{\|}{C}}-(CH_2)_2-\overset{O}{\overset{\|}{C}}O-(CH_2)_4-O]-H \quad \text{and/or} \quad B) \ HO-[\overset{O}{\overset{\|}{C}}-(C_6H_4)-\overset{O}{\overset{\|}{C}}O-(CH_2)_4-O]-H \quad (I)$$

The products A) and/or B) of the reaction according to equation (I) are distributed randomly in the "aromatic-aliphatic prepolymer", which can be represented by the following formula (II).

$$HO-[\overset{O}{\overset{\|}{C}}-(CH_2)_2-\overset{O}{\overset{\|}{C}}O-(CH_2)_4-O\overset{O}{\overset{\|}{C}}-(C_6H_4)-\overset{O}{\overset{\|}{C}}O-(CH_2)_4-O]-H \quad (II)$$

To produce (i) the "aromatic-aliphatic prepolymers" defined above, in the first reaction step, for 1.0 mole of total dicarboxylic acid (sum of (a) and (b)) which is added in the first reaction step, the mole ratio of (c) aliphatic or alicyclic glycols is preferably from 1.1 mole to 1.5 mole. And for dicarboxylic acid ingredients which are added in the first reaction step, the mole ratio of aromatic component to aliphatic component is preferably in the range from 0.2:0.8 to 0.8:0.2. If the mole ratio is less than 0.2:0.8, the reactivity decreases and the copolyester resin has poor physical properties and color. If the mole ratio is higher than 0.8:0.2, the rate of biodegradation decreases. And the most prefered mole ratio of (a) aromatic dicarboxylic acid or anhydrides thereof : (b) aliphatic or alicyclic dicarboxylic acid or anhydrides thereof : (c) aliphatic or alicyclic glycols is 0.45:0.55:1.35.

Then, in the second reaction step, to the (i) "aromatic-aliphatic prepolymer" produced in the first reaction step is added (ii) one or more aliphatic or alicyclic dicarboxylic acids or anhydrides thereof including succinic acid, and (iii) one or more aliphatic or alicyclic glycols selected from at least one of 1,4-butanediol and ethylene glycol, and at a temperature from 200°C to 220°C, an esterification and/or ester-exchange reaction is performed. After the resulting water or methanol has been extracted, a polymeric resin is obtained. The amount of the (i) "aromatic-aliphatic prepolymers" preferably ranges from 0.1 wt% to 30wt%. If the amount of the (i) "aromatic-aliphatic prepolymers" is less than 0.1 wt%, not only the reaction time becomes longer but also the physical properties become poorer. If the amount of the (i) "aromatic-aliphatic prepolymers" is more than 30wt%, the rate of biodegradation becomes slow and the melting point is lowered so it is difficult to process the product by plastic processing equipment.

Finally, in the third reaction step, the polymeric resin produced in the second reaction step is polycondensed at a temperature of from 210°C to 270°C and 0.005~10Torr to produce a copolyester resin with a number-average molecular weight of from 30,000 to 70,000, weight-average molecular weight of from 100,000 to 600,000, melting point of from 55°C to 120°C, and melt index of from 0.1 to 30 g/10minute (190°C, 2,160g).

At the start of and/or the end of the esterification or ester-exchange reaction in the first and second reaction steps, a single catalyst or mixture of catalysts can be added, wherein the amount of the catalyst(s) is preferably in the range of from 0.02wt% to 2.0wt% of the total reactants. If the amount of catalyst employed is less than 0.02wt%, it takes a long time to extract the theoretical amount of water, methanol or glycol, or it is impossible to extract. If the amount of the catalyst employed is more than 2.0wt%, the color of the product is poor even though the theoretical amount of water, methanol or glycol can be easily extracted. The catalysts are preferably selected from compounds of Ti, Ge, Zn, Fe, Mn, Co, and Zr, preferably from organometallic compounds comprising titanate, antimonate or tin oxide and, more preferably, from one or more of tetrabutyl titanate, calcium acetate, antimony trioxide, dibutyltin oxide, zinc acetate, antimony acetate, antimony glycolate, tetrapropyl titanate.

Additionally, at the start of and/or the end of the esterification or ester-exchange reaction in the first and second reaction step, a stabilizer should preferably be added in an amount from 0.02wt% to 2.0wt%. If the amount of the stabilizer used is less than 0.02wt%, the effect of the stabilizer is not sufficient and the color of the copolyester product is yellow or brown. If the amount of the stabilizer exceeds 2.0wt%, the time required for the reaction is extended and the product will not have a sufficiently-high molecular weight. The preferred amount of the stabilizer is about 0.22wt%, and the stabilizer used is preferably at least one phosphatic stabilizer, e.g. trimethyl phosphate, phosphoric acid and/ or triphenyl phosphate.

Because of the enhanced physical properties and processability of the copolyester resin according to the present invention, it is suitable for use in packaging films and rubbish bags.

The invention will now be described with reference to certain specific examples which are provided hereinafter for the purpose of illustration only and not limitation..

## EXAMPLES

In the following examples, the tensile strength, elongation at break of the films were measured by ASTM D882 after the copolyester was press-formed about 150μm thickness; the tear strength was measured by ASTM D1922 with 40μm thickness blown film. Melt index (MI) was measured by ASTM D1238, where the temperature was 190μm and the load was 2,160g. The melting point was measured by using differential scanning calorimetry (DSC) with the scan rate of 10°C/minute. Molecular weights are measured by gel permeation chromatography (GPC) and are based on polystyrene equivalent molecular weights. And the processability was determined whether it can be processed with conventional low density polyethylene (LDPE) blown film extruder.

EXAMPLE 1

First, after purging a 500ml reactor with nitrogen, 19.2g of dimethyl terephthalate and 27 g of 1,4-butanediol are added to a reactor, and the mixture is ester-exchange reacted until the approximate theoretical amount of methanol is produced at the temperature of 200°C. And then, 11.8g of succinic acid is added thereto, and the mixture is esterified until the approximate theoretical amount of water is produced at the temperature of 180°C, thus obtain 39.4g of "aromatic-aliphatic prepolymers" wherein the number average molecular weight of "aromatic-aliphatic prepolymers" is approximately 500.

And then, 118g of succinic acid, 135g of 1,4-butanediol and 0.3g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.07g of tetrabutyl titanate acting as catalysts and 0.2g of trimethyl phosphate acting as a stabilizer are added thereto.

Finally, the temperature is elevated to 245°C and polycondensation (or condensation-polymerization) is allowed to proceed for 210 minutes under 0.3 Torr vacuum condition.

The product has a melt index of 3 g/10min. (190°C, 2,160g), a number average molecular weight of 47,000, a weight average molecular weight of 380,000 and a melting point of 100°.

EXAMPLE 2

First, after purging a 500ml reactor with nitrogen, 8.5g of dimethyl terephthalate and 25 g of 1,4-butanediol are added to a reactor, and the mixture is ester-exchange reacted until the approximate theoretical amount of methanol is produced at the temperature of 200°C. And then, 5.9g of succinic acid and 7.3g of adipic acid are added thereto, and the mixture is esterified until the approximate theoretical amount of water is produced at the temperature of 180°C, thus obtain 28g of "aromatic-aliphatic prepolymers" wherein the number average molecular weight of "aromatic-aliphatic prepolymers" is approximately 10,000.

And then, 107g of succinic acid, 14.6g of adipic acid, 135g of 1,4-butanediol and 0.4g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.07g of tetrabutyl titanate acting as catalysts and 0.2g of trimethyl phosphate acting as a stabilizer are added thereto.

Finally, the temperature is elevated to 245°C and polycondensation (or condensation-polymerization) is allowed to proceed for 200 minutes under 0.3 Torr vacuum condition.

The product has a melt index of 7 g/10min. (190°C, 2,160g), a number average molecular weight of 39,000, a weight average molecular weight of 290,000 and a melting point of 98°C.

EXAMPLE 3

First, after purging a 500ml reactor with nitrogen, 5.91g of terephthalic acid and 12.6g of 1,4-butanediol are added to a reactor, and the mixture is esterified until the approximate theoretical amount of water is produced at the temperature of 200°C. And then, 4.72g of succinic acid is added thereto, and the mixture is esterified until the approximate theoretical amount of water is produced at the temperature of 180°C, thus obtain 13g of "aromatic-aliphatic prepolymers" wherein the number average molecular weight of "aromatic-aliphatic prepolymers" is approximately 400.

And then, 118g of succinic acid, 92g of ethylene glycol and 0.4g of tetrabutyl titanate acting as a catalyst are added thereto, and it reacts for 2 hours until the approximate theoretical amount of water is produced at the temperature of 200°C. At the end of this reaction step, 0.1g of antimony trioxide, 0.2g of dibutyltin oxide and 0.07g of tetrabutyl titanate acting as catalysts and 0.2g of trimethyl phosphate acting as a stabilizer are added thereto.

Finally, the temperature is elevated to 245°C and polycondensation (or condensation-polymerization) is allowed to proceed for 220 minutes under 0.3 Torr vacuum condition.

The product has a melt index of 10 g/10min. (190°C, 2,160g), a number average molecular weight of 41,000, a weight average molecular weight of 380,000 and a melting point of 95°C.

EXAMPLE 4

First, after purging a 500ml reactor with nitrogen, 9.85g of dimethyl terephthalate and 18g of 1,4-butanediol are added to a reactor, and the mixture is ester-exchange reacted until the approximate theoretical amount of methanol is produced at the temperature of 200°C. And then, 4.72g of succinic acid and 5.84g of adipic acid are added thereto, and the mixture is esterified until the approximate theoretical amount of water is produced at the temperature of 180□, thus obtain 26g of "aromatic-aliphatic prepolymers" wherein the number average molecular weight of "aromatic-aliphatic prepolymers" is approximately 2,000.

And then, 118g of succinic acid, 135g of 1,4-butanediol and 0.5g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.07g of tetrabutyl titanate acting as catalysts and 0.2g of trimethyl phosphate acting as a stabilizer are added thereto.

Finally, the temperature is elevated to 245°C and polycondensation (or condensation-polymerization) is allowed to proceed for 200 minutes under 0.3 Torr vacuum condition.

The product has a melt index of 4 g/10min. (190°C, 2,160g), a number average molecular weight of 42,000, a weight average molecular weight of 400,000 and a melting point of 109°C.

EXAMPLE 5

First, after purging a 500ml reactor with nitrogen, 1.97g of dimethyl terephthalate and 10.8g of 1,4-butanediol are added to a reactor, and the mixture is ester-exchange reacted until the approximate theoretical amount of methanol is produced at the temperature of 200°C. And then, 2.36g of succinic acid and 2.92g of adipic acid are added thereto, and the mixture is esterified until the approximate theoretical amount of water is produced at the temperature of 180°C, thus obtain 9.9g of "aromatic-aliphatic prepolymers" wherein the number average molecular weight of "aromatic-aliphatic prepolymers" is approximately 1,500.

And then, 118g of succinic acid, 99g of 1,4-butanediol, 18g of ethylene glycol and 0.1 g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.07g of tetrabutyl titanate acting as catalysts and 0.2g of trimethyl phosphate acting as a stabilizer are added thereto.

Finally, the temperature is elevated to 245°C and polycondensation (or condensation-polymerization) is allowed to proceed for 210 minutes under 0.3 Torr vacuum condition.

The product has a melt index of 9 g/10min. (190°C, 2,160g), a number average molecular weight of 33,000, a weight average molecular weight of 190,000 and a melting point of 98°C.

EXAMPLE 6

The "aromatic-aliphatic prepolymers" with number average molecular weight of approximately 500 was obtained following the same procedure as in Example 1.

After purging a 500ml reactor with nitrogen, 10g of "aromatic-aliphatic prepolymers" with number average molecular weight of approximately 500, 107g of succinic acid, 14.6g of adipic acid, 108g of 1,4-butanediol, 6.2g of ethylene glycol and 0.35g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.1 g of tetrabutyl titanate acting as catalysts and 0.2g of trimethyl phosphate acting as a stabilizer are added thereto.

Finally, the temperature is elevated to 244°C and polycondensation (or condensation-polymerization) is allowed to proceed for 220 minutes under 0.3 Torr vacuum condition.

The product has a melt index of 5 g/10min. (190°C, 2,160g), a number average molecular weight of 38,000, a weight average molecular weight of 250,000 and a melting point of 91°C.

EXAMPLE 7

The "aromatic-aliphatic prepolymers" with number average molecular weight of approximately 10,000 was obtained following the same procedure as in Example 2.

After purging a 500ml reactor with nitrogen, 10g of "aromatic-aliphatic prepolymers" with number average molecular weight of approximately 10,000, 107g of succinic acid, 14.6g of adipic acid, 135g of 1,4-butanediol and 0.4g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.1 g of tetrabutyl titanate acting as catalysts and 0.2g of trimethyl phosphate acting as a stabilizer are added thereto.

Finally, the temperature is elevated to 243°C and polycondensation (or condensationpolymerization) is allowed to proceed for 210 minutes under 0.3 Torr vacuum condition.

The product has a melt index of 9 g/10min. (190°C, 2,160g), a number average molecular weight of 34,000, a weight average molecular weight of 210,000 and a melting point of 104°C.

EXAMPLE 8

The "aromatic-aliphatic prepolymers" with number average molecular weight of approximately 400 was obtained following the same procedure as in Example 3.

After purging a 500ml reactor with nitrogen, 6g of "aromatic-aliphatic prepolymers" with number average molecular weight of approximately 400, 146g of adipic acid, 135g of 1,4-butanediol and 0.4g of tetrabutyl titanate acting as a catalyst are added thereto, and it reacts for 2 hours until the approximate theoretical amount of water is produced at the temperature of 200°C. At the end of this reaction step, 0.1 g of antimony trioxide, 0.2g of dibutyltin oxide and 0.1g of tetrabutyl titanate acting as catalysts and 0.2g of trimethyl phosphate acting as a stabilizer are added thereto.

Finally, the temperature is elevated to 242°C and polycondensation (or condensation-polymerization) is allowed to proceed for 210 minutes under 0.3 Torr vacuum condition.

The product has a melt index of 3 g/10min. (190°C, 2,160g), a number average molecular weight of 42,000, a weight average molecular weight of 390,000 and a melting point of 59°C.

COMPARATIVE EXAMPLE 1

After purging a 500ml reactor with nitrogen, 108g of 1,4-butanediol and 118 g of succinic acid are added to a heat-melting condensation reactor. After the temperature is elevated under an atmosphere of nitrogen, esterification is allowed for 5 hours at the temperature of from 140°C to 200°C, and esterification is continually allowed for 1.5 hours under 20 to 2 mmHg pressure.

And then, 0.2g of tetraisopropyl titanate acting as a catalyst is added thereto. Then, the de-glycol reaction is allowed for 6 hours under 15 to 0.2mmHg pressure at the temperature of 220°C.

The product has a number average molecular weight of 16,100, a weight average molecular weight of 44,100 and a melting point of 118°C.

COMPARATIVE EXAMPLE 2

After purging a 500ml reactor with nitrogen, 92g of ethylene glycol, 118g of succinic acid and 0.07g of tetrabutyl titanate acting as a catalyst are added to a heat-melting condensation reactor. After the temperature is elevated under an atmosphere of nitrogen, esterification is allowed for 2 hours at the temperature of 200°C and esterification is continually allowed for 0.5 hours under 20 to 2 mmHg pressure.

Next, 0.07g of tetrabutyl titanate and 0.45g of dibutyltin oxide acting as catalysts, and 0.2g of trimethyl phosphate acting as a stabilizer are added thereto under atmosphere of nitrogen. Then, the de-glycol reaction is allowed for 18 hours under 15 to 0.2 mmHg pressure at the temperature of 250°C.

The product has a number average molecular weight of 9,000, a weight average molecular weight of 32,000 and a melting point of 100°C.

COMPARATIVE EXAMPLE 3

After purging a 500ml reactor with nitrogen, 108g of 1,4-butanediol, 21.9g of adipic acid and 100.3g of succinic acid are added to a heat-melting condensation reactor. After the temperature is elevated under an atmosphere of nitrogen, esterification is allowed for 2 hours at the temperature of 200°C and esterification is continually allowed for 0.5 hours under 20 to 2 mmHg pressure.

Next, 0.07g of tetraisopropyl titanate and 0.45g of dibutyltin oxide acting as catalysts, and 0.2g of trimethyl phosphate acting as a stabilizer are added thereto under atmosphere of nitrogen. Then, the de-glycol reaction is allowed for 3.2 hours under 15 to 0.2 mmHg pressure at the temperature of 250°C.

The product has a number average molecular weight of 31,000, a weight average molecular weight of 84,000 and a melting point of 95°C.

COMPARATIVE EXAMPLE 4

After purging a 500ml reactor with nitrogen, 180g of 1,4-butanediol, 94.5 g of succinic acid, 29.2g of adipic acid and 0.87ml of titanium isopropoxide in n-butanol solution (1.02wt/vol% Ti) acting as a catalyst, and 0.178g of ULTRANOX 626(0.1wt%) (produced by GE Specialty Chemicals Co.) acting as a stabilizer are added to a reactor. The mixture was heated with stirring under nitrogen at 200°C for 1.0 hour, at 210°C for 1.0 hour and at 220°C for 0.5 hour. The reaction temperature was then increased to 260°C. After stabilizing at 260°C, the internal pressure was reduced to 0.2mmHg, and the reaction was continued for 3.5 hours. The resulting copolymer was white and semicrystalline.

The product has a number average molecular weight of 32,400, a weight average molecular weight of 83,400 and a melting point of 95.4°C.

COMPARATIVE EXAMPLE 5

After purging a 500ml reactor with nitrogen, 51.5g of 1,4-butanediol, 59.1g of succinic acid, 45.6g of diethylene glycol and 0.71ml of titanium isopropoxide in n-butanol solution (1.25wt/vol% Ti) acting as a catalyst are added to a reactor. The mixture was heated with stirring under nitrogen at 200°C for 1.0 hour, at 210°C for 1.0 hour and at 220°C for 1.0 hour. The reaction temperature was then increased to 250°C. After stabilizing at 250°C, the internal pressure was reduced to 0.3mmHg, and the reaction was continued for 2.0 hours. The resulting copolymer was pale yellow and semicrystalline.

The product has a number average molecular weight of 64,400, a weight average molecular weight of 126,000 and a melting point of 91.5°C.

COMPARATIVE EXAMPLE 6

After purging a 500ml reactor with nitrogen, 90.0g of 1,4-butanediol, 59.1g of succinic acid and 0.84ml of titanium isopropoxide in n-butanol solution (1.02wt/vol% Ti) acting as a catalyst are added to a reactor. The mixture was heated with stirring under nitrogen at 200°C for 1.0 hour, at 210°C for 1.0 hour and at 220°C for 1.0 hour. The reaction temperature was then increased to 250°C. After stabilizing at 250°C, the internal pressure was reduced to 0.2mmHg, and the reaction was continued for 3.5 hours. The resulting copolymer was pale yellow and semicrystalline.
The product has a number average molecular weight of 40,000, a weight average molecular weight of 101,000 and a melting point of 120.8°C.

COMPARATIVE EXAMPLE 7

After purging a 500ml reactor with nitrogen, 146g of dimethyl succinate, 162g of 1,4-butanediol and 0.03g of tetrabutyl titanate acting as a catalyst are added to a heat-melting condensation reactor, and the mixture is reacted until the approximate theoretical amount of methanol is produced at the temperature of 200°C.
After the completion of ester-exchange reaction, 0.3g of tetrabutyl titanate, 0.8g of dibutyltin oxide acting as catalysts, and 0.4g of trimethyl phosphate, 0.01g of cobalt acetate acting as stabilizers are added thereto slurried in 1,4-butanediol. And then it was mixed for 10 minutes at the temperature of 230°C.
Then the polycondensation (or condensation polymerization) is allowed for 5 hours under 3mmHg pressure at the temperature of 250°C.
The product has a number average molecular weight of 44,700, and a weight average molecular weight of 94,000 and a melting point of 118°C.

COMPARATIVE EXAMPLE 8

After purging a 500ml reactor with nitrogen, 84.4g of succinic acid, 13.2g of glutaric acid, 14.6g of adipic acid, 112.4g of 1,4-butanediol and 0.03g of tetrabutyl titanate acting as a catalyst are added to a heat-melting condensation reactor, and the mixture is reacted until the approximate theoretical amount of water is produced at the temperature of 200°C.
After the completion of esterification reaction, 0.3g of tetrabutyl titanate, 0.8g of dibutyltin oxide acting as catalysts, and 0.4g of trimethyl phosphate, 0.01g of cobalt acetate acting as stabilizers are added thereto slurried in 1,4-butanediol. And then it was mixed for 10 minutes at the temperature of 230°C.
Then the polycondensation (or condensation polymerization) is allowed for 5 hours under 3mmHg pressure at the temperature of 250°C.
The product has a number average molecular weight of 33,400, and a weight average molecular weight of 87,000 and a melting point of 93°C.

COMPARATIVE EXAMPLE 9

After purging a 500ml reactor with nitrogen, 146g of dimethyl succinate, 38g of 1,3-propanediol, 117.1g of 1,4-butanediol and 0.03g of tetrabutyl titanate acting as a catalyst are added to a heat-melting condensation reactor, and the mixture is reacted until the approximate theoretical amount of methanol is produced at the temperature of 200°C.
After the completion of ester-exchange reaction, 0.3g of tetrabutyl titanate, 0.8g of dibutyltin oxide acting as catalysts, and 0.4g of trimethyl phosphate, 0.01g of cobalt acetate acting as stabilizers are added thereto slurried in 1,4-butanediol. And then it was mixed for 10 minutes at the temperature of 230°C.
Then the polycondensation (or condensation polymerization) is allowed for 5 hours under 3mmHg pressure at the temperature of 250°C.
The product has a number average molecular weight of 30,100, and a weight average molecular weight of 75,000 and a melting point of 84°C.
The properties of the copolyester resin of the present invention according to the examples 1 to 8 and the conventional polyester resin according to the comparative examples 1 to 9 are provided in Table 1.
As shown in table 1, the copolyester resin of the present invention is a high molecular weighted polymer both in number average and in weight average, and has good processability and superior physical properties, so it can be used in many practical uses including packaging film and rubbish bags.

Table 1.

| | EXAMPLE | | | | | | | | COMPARATIVE EXAMPLE | | | | | | | | |
|---|---|---|---|---|---|---|---|---|---|---|---|---|---|---|---|---|---|
| | 1 | 2 | 3 | 4 | 5 | 6 | 7 | 8 | 1 | 2 | 3 | 4 | 5 | 6 | 7 | 8 | 9 |
| Succinic acid | 118 | 107 | 118 | 118 | 118 | 107 | 107 | | 118 | 118 | 100.3 | 94.5 | 59.1 | 59.1 | | 84.4 | |
| Adipic acid | | 14.6 | | | | 14.6 | 14.6 | 146 | | | 21.9 | 29.2 | | | | 14.6 | |
| Ethylene glycol | | | 92 | | 18 | 6.2 | | | | 92 | | | | | | | |
| 1,4-butanediol | 135 | 135 | | 135 | 99 | 108 | 135 | 135 | 108 | | 108 | 180 | 51.5 | 90 | 162 | 112.4 | 117.1 |
| Glutaric acid | | | | | | | | | | | | | | | | 13.2 | |
| Dimethyl succinate | | | | | | | | | | | | | | | 146 | | 146 |
| "aromatic-aliphatic prepolymers" having Mn of 300 to 30,000 | 39.4 | 28 | 13 | 26 | 9.9 | 10 | 10 | 6 | | | | | | | | | |
| 1,3-propanediol | | | | | | | | | | | | | | | | | 38 |
| Diethylene glycol | | | | | | | | | | | | | 45.6 | | | | |
| Tear strength(g/✄) MD/TD | 6.1/ 8.3 | 5.5/ 7.8 | 5.1/ 8.0 | 6.4/ 8.9 | 5.2/ 7.0 | 6.4/ 7.9 | 5.4/ 8.1 | 6.0/ 8.3 | - | - | - | - | - | - | - | - | - |
| Mn | 47,000 | 39,000 | 41,000 | 42,000 | 33,000 | 38,000 | 34,000 | 42,000 | 16,100 | 9,000 | 31,000 | 32,400 | 64,400 | 40,000 | 44,700 | 33,400 | 30,100 |
| Mw | 380,000 | 290,000 | 380,000 | 400,000 | 190,000 | 250,000 | 210,000 | 390,000 | 44,100 | 32,000 | 84,000 | 83,400 | 126,000 | 101,000 | 94,000 | 87,000 | 75,000 |
| Tensile strength (kg/cm$^2$) | 354 | 417 | 335 | 350 | 405 | 402 | 420 | 340 | 130 | - | 270 | 257 | - | 151 | 310 | 320 | 280 |
| Elongation (%) | 250 | 700 | 200 | 200 | 350 | 800 | 600 | 220 | 100 | - | 300 | 15 | - | 2.1 | 70 | 300 | 400 |
| MI (g/10min) | 3 | 7 | 10 | 4 | 9 | 5 | 9 | 3 | NA | NA | NA | 70 | 40 | 50 | 45 | 70 | 85 |
| Melting point (□) | 100 | 98 | 95 | 109 | 98 | 91 | 104 | 59 | 118 | 100 | 95 | 95.4 | 91.5 | 120.8 | 118 | 93 | 84 |
| Processability | P | P | P | P | P | P | P | P | PI | PI | PI | PI | PI | PI | PI | PI | PI |

Mn : number average molecular weight, Mw : weight average molecular weight
P : Processable, IP : Processing Impossible, NA : Not applicable (too high MI)

## THE ADVANTAGES OF THE PRESENT INVENTION

Conventional aliphatic polyesters cannot be used in many applications because of their poor physical properties, especially tensile strength and tear strength. But the copolyester resins of present invention are suitable for many practical uses including packaging films and rubbish bags. The processability and physical properties of the copolyester resin of present invention has been greatly enhanced by incorporating (i) the "aromatic-aliphatic prepolymer" defined above. Thus the product can be processed by using conventional polyethylene or polypropylene processing equipment without any modifications. The environmental problem of the disposal of plastics which causes worldwide concern can be solved by commercializing biodegradable copolyesters which can be transformed into carbon dioxide and water in the environment.

## Claims

1.  A copolyester resin composition having a number-average molecular weight from 30,000 to 70,000 determined by GPC obtained from (i) 0.1 to 30% by weight of at least one aromatic-aliphatic prepolymer (ii) 40 to 71% by weight of at least one aliphatic or alicyclic dicarboxylic acid (or anhydride thereof) and (iii) 29 to 60% by weight of at least one aliphatic or alicyclic glycol.

2.  The copolyester resin composition according to claim 1, which has a weight-average molecular weight of from 100,000 to 600,000 determined by GPC; a melting point of from 55°C to 125°C determined by DSC; and a melt index of from 0.1 to 30 g/10min. (190°C, 2,160g) determined by ASTM D1238.

3.  The copolyester resin composition according to claim 1, wherein the aromatic-aliphatic prepolymer has a number average molecular weight of from 300 to 30,000 and is prepared by a condensation, esterification, and/or ester-exchange reaction between

    (a) at least one aromatic dicarboxylic acid or anhydride thereof ;

    (b) at least one aliphatic or alicyclic dicarboxylic acid or anhydride; and

    (c) at least one aliphatic or alicyclic glycol.

4.  The copolyester resin composition according to claim 3, wherein the mole ratio of the total dicarboxylic acid or anhydride to the glycol is from 1:1.1 to 1:1.5.

5.  The copolyester resin composition according to claim 3 or 4, wherein the mole ratio of the aromatic dicarboxylic acid to aliphatic or alicyclic dicarboxylic acid is from 0.2: 0.8 to 0.8:0.2.

6.  The copolyester resin composition according to claim 1, wherein said aliphatic or alicyclic dicarboxylic acid is one or more of succinic acid, glutaric acid, adipic acid, pimelic acid, suberic acid, azelaic acid, sebacic acid, 1,9-nonanedicarboxylic acid, 1,10-decanedicarboxylic acids and/or anhydrides thereof.

7.  The copolyester resin composition according to claim 1, wherein said glycol is one or more of ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol.

8.  The copolyester resin composition according to claim 3, wherein said aromatic dicarboxylic acid or anhydride thereof is one or more of dimethyl terephthalate, terephthalic acid, phthalic acid, phthalic anhydride, isophthalic acid, 4-methylphthalic acid, 4-methylphthalic anhydride and dimethyl phthalate.

9.  The copolyester resin composition according to claim 3, wherein said aliphatic or alicylic dicarboxylic acid or anhydride thereof is one or more of succinic acid, glutaric acid, adipic acid, pimelic acid, suberic acid, azelaic acid, sebacic acid, 1,9-nonanedicarboxylic acid, 1,10-decanedicarboxylic acid and/or anhydrides thereof.

10. The copolyester resin composition according to claim 3, wherein said glycol is selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol and mixtures thereof.

11. A method for preparing a high molecular weight copolyester resin comprising;

a first step of preparing an aromatic-aliphatic prepolymer having a number-average molecular weight of from 300 to 30,000 by a condensation, esterification, and/or ester-exchange reaction of at least one aromatic dicarboxylic acid or anhydride thereof with at least one aliphatic or alicyclic glycol and an aliphatic or alicyclic dicarboxylic acid or anhydride thereof at the temperature from 160°C to 220°C ;

a second step of preparing a polymeric resin by an esterification and/or ester-exchange reaction between the aromatic-aliphatic prepolymer prepared in the first step with at least one aliphatic or alicyclic dicarboxylic acid or anhydride thereof and at least one aliphatic or alicyclic glycol, at a temperature from 200°C to 220°C; and

a third step of performing a polycondensation of the polymeric resin prepared in the second step at a temperature from 210°C to 270°C at a pressure of 0.005～10Torr.

12. The method for preparing copolyester resin according to claim 11, wherein the mole ratio of the total dicarboxylic acid or anhydride to the glycol is from 1:1.1 to 1:1.5.

13. The method for preparing copolyester resin according to claim 11, wherein the mole ratio of the aromatic dicarboxylic acid to aliphatic or alicyclic dicarboxylic acid is from 0.2: 0.8 to 0.8:0.2.

14. The method for preparing copolyester resin according to claim 11, wherein from 0.02wt% to 2wt% of a catalyst is presented at the start or at the end of the esterification or ester-exchange reaction in the first and/or second reaction steps.

15. The method for preparing copolyester resin according to claim 14, wherein said catalyst is selected from tetrabutyl titanate, calcium acetate, antimony trioxide, dibutyltin oxide, zinc acetate, antimony acetate, antimony glycolate, tetrapropyl titanate and mixtures thereof.

16. The method for preparing copolyester resin according to claim 11, wherein from 0.02wt% to 2wt% of a stabilizer is present at the start or at the end of the esterification or ester-exchange reaction in the first and/or second reaction step.

17. The method for preparing copolyester resin according to the claim 16, wherein the stabilizer is selected from of trimethyl phosphate, phosphoric acid, triphenyl phosphate and mixtures thereof.